Europäisches Patentamt

European Patent Office

Office européen des brevets

(19)

(11) Veröffentlichungsnummer: **0 194 354**
**B1**

(12)

# EUROPÄISCHE PATENTSCHRIFT

(45) Veröffentlichungstag der Patentschrift:
03.05.89

(21) Anmeldenummer: 85116228.9

(22) Anmeldetag: 19.12.85

(51) Int. Cl.⁴: **G 01 N 3/06**

(54) Verfahren und Anordnung zur Untersuchung einer Probe unter Zug.

(30) Priorität: **14.03.85 DE 3509163**

(43) Veröffentlichungstag der Anmeldung:
**17.09.86 Patentblatt 86/38**

(45) Bekanntmachung des Hinweises auf die Patenterteilung:
**03.05.89 Patentblatt 89/18**

(84) Benannte Vertragsstaaten:
**DE FR GB**

(56) Entgegenhaltungen:
**DE-A- 2 417 232**
**DE-A- 2 749 836**
**FR-B- 2 322 372**
**GB-A- 892 432**

**PATENT ABSTRACTS OF JAPAN, Band 9, Nr. 157
(P-369)[1880], 2. Juli 1985; & JP - A - 60 33028 (TOUYOU
SEIKI SEISAKUSHO K.K.) 20.02.1985**

(73) Patentinhaber: **FRAUNHOFER-GESELLSCHAFT ZUR
FÖRDERUNG DER ANGEWANDTEN FORSCHUNG E.V.,
Leonrodstrasse 54, D-8000 München 19 (DE)**

(72) Erfinder: **Kugler, Hans-Peter, Dipl.-Ing.,
Siedlerstrasse 34, D-7519 Zaisenhausen (DE)**
Erfinder: **Geissler, Adam, Dipl.-Ing., Lachenweg 10,
D-7529 Karlsdorf-Neuthard (DE)**
Erfinder: **Eisenreich, Norbert, Dr. Dipl.-Phys.,
Amselstrasse 16, D-7507 Pfinztal 1 (DE)**
Erfinder: **Fabry, Klaus, Dipl.-Math., Goethestrasse 3,
D-7519 Walzbachtal (DE)**

(74) Vertreter: **Dr.-Ing. Hans Lichti Dipl.-Ing. Heiner Lichti
Dipl.-Phys. Dr. Jost Lempert,
Postfach 41 07 60 Durlacher Strasse 31,
D-7500 Karlsruhe 41 (DE)**

**Beschreibung**

Die Erfindung betrifft eine Verfahren zur Untersuchung von Materialien unter Zug, wobei eine Probe an ihren Enden eingespannt, eine Zugspannung ausgeübt und die Probe damit gedehnt wird sowie ein auf die Probe gerichteter und von dieser reflektierter Strahl in einem Fotoempfänger aufgenommen und elektronisch verarbeitet wird sowie eine Anordnung zur Untersuchung von Materialien unter Zug, mit einer Zugeinrichtung und einer Meßeinrichtung, wobei vor einer Probe eine Lichtquelle sowie mindestens ein Lichtempfänger angeordnet sind und zwischen Lichtquelle und Probe eine Deflektionseinrichtung vorgesehen ist.

Aus der DE-A-2 631 663 ist die berührungslose Messung relativer Längenänderungen einer Probe auf der Basis von Laufzeitvergleichsmessungen von Laserreflexen bei kontinuierlicher Abtastung der gesamten Meßlänge der Probe beschrieben, wobei ein Lichtstrahl mittels eines Strahlungsteilers geteilt, der eine Teil auf die Probe und anschließend von einem Fotodetektor aufgenommen wird, während der andere Strahl durch eine einstellbare Referenzblende auf einen zweiten gleichartigen Fotodetektor gerichtet wird.

Es ist zur Auswertung ein wiederholtes Abtasten der Zone unterschiedlichen Reflexionsverhaltens des Meßobjekts erforderlich, um überhaupt ein Meßergebnis zu erhalten. Aus diesem Grunde besitzt das Verfahren keine ausreichende Zeitauflösung, ermöglicht insbesondere nicht schnelle, plötzliche Längenänderungen unverzüglich festzustellen, so daß auch dieses Verfahren nicht zu Schnellzug- oder Reißversuchen eingesetzt werden kann. Darüber hinaus kann das Verfahren nur eine gemittelte Längenänderung über den gesamten Meßbereich feststellen, nicht aber ein unterschiedliches Dehnungsverhalten in verschiedenen Bereichen der Probe, insbesondere nicht die räumliche Dehnungsverteilung auf der Probe, was insofern wichtig ist, als eine Probe nicht unbedingt in allen ihren Bereichen gleichen Längenänderungen bei gleicher angelegter Zugspannung unterliegt, sondern unterschiedliche Verteilung aufweisen kann.

Aus «Meßtechnische Briefe» 13 (1977), Heft 2, Seiten 25-31 ist ein berührungsloses optisches Meßverfahren mittels Kathetometer bekannt, bei dem an den Proben angebrachte Markierungen mit Hilfe einer optischen Zieleinrichtung vom Bedienungspersonal angepeilt und die Abstände zwischen den Markierungen durch ein in das Kathetometer eingebautes Linearmeßsystem gemessen werden. Es handelt sich hier um subjektives Meßverfahren durch Beobachtung, wobei vom Bedienungspersonal aufgrund der Beobachtung vorgenommene Einstellungen gegebenenfalls automatisch weiterverarbeitet werden können. In das Meßverfahren geht die subjektive Entscheidung des Bedienungspersonals mit ein. Darüber hinaus können mit dem bekannten Verfahren keine dynamischen Zugversuche, sondern nur Kriechversuche untersucht werden. Weiterhin können hierdurch nur Messungen der Längsdehnung vorgenommen werden.

Auch beim Gegenstand der DE-A-2 234 213 handelt es sich um ein subjektives Verfahren, nämlich ein Verfahren zum Sichtbarmachen von aperiodischen elastischen Verformungen an bewegten Körpern, bei denen die Bewegungen nicht mehr durch periodische Lichtblitze beobachtet werden können, sondern vielmehr die Lichtblitze dem aperiodischen Zeitverhalten angepaßt werden müssen.

Ausschließlich hierzu ist ein Raster vorgesehen, welcher mit einer einstell- und justierbaren Optik mit mindestens zwei zugeordneten Sensoren über eine logische Schaltung eine Synchronisation der Rastermarken einerseits und der Lichtstrahlen bewerkstelligt, so daß die Lichtblitze in geeigneten Momenten erzeugt werden können, um so die gewünschte subjektive stroboskopische Beobachtung durchführen zu können.

Ausgehend vom Gegenstand der DE-A-2 631 663 liegt der Erfindung die Aufgabe zugrunde, ein Verfahren und eine Anordnung zu schaffen, mittels derer das Verhalten einer Probe unter Zug, insbesondere das Dehnungs- und Kontraktionsverhalten und vor allem eventuell auftretende Volumenänderungen in einfacher und bequemer Weise, insbesondere auch seriemäßig untersucht werden kann, wobei die Verteilung des Dehnungsverhaltens der Probe insbesondere über ihre Länge und ihr Verhalten, insbesondere auch bei Schnellzug- und Reißversuchen, untersuchbar sein sollten.

Erfindungsgemäß wird die genannte Aufgabe bei einem Verfahren der eingangs genannten Art dadurch gelöst, daß die mit einem Querraster unterschiedlichen Reflexions- bzw. Absorptionsvermögen versehene Probe von dem Lichtstrahl in Längsrichtung überstrichen wird, so daß die Modulationsfrequenz des reflektierten intensitätsmodulierten Lichts durch die Dehnung verändert wird. Eine erfindungsgemäße Anordnung zur Untersuchung von Materialien unter Zug sieht zur Lösung der Aufgabe vor, daß auf der Probe ein Querraster unterschiedlichen Reflexions- bzw. Absorptionsvermögen aufgebracht ist und der Deflektionseinrichtung eine Linse zur Parallelisierung der von der Deflektionseinrichtung wiederholt abgelenkten, die Probe überstreichenden Lichtstrahlen nachgeordnet ist und daß dem Lichtempfänger eine elektronische Auswerteeinheit zur Auswertung der in der Modulationsfrequenz des durch die Probe reflektierten Lichts enthaltenen Information nachgeordnet ist.

Eine äußerst bevorzugte Ausgestaltung sieht weiterhin vor, daß ein zweiter Lichtstrahl endlicher Breite, dessen Ausdehnungen die Breite der Probe in ungedehntem Zustand nicht unterschreitet, auf die Probe gerichtet und das hinter der Probe auf einen Detektor fallende Licht in eine Spannung umgewandelt und diese Spannung gemessen wird. Eine solche Vorgehensweise ermöglichende Anordnung sieht vor, daß weiter eine Einrichtung zur Messung der Breitenänderung der Probe vorgesehen ist, die eine vor der Probe angeordnete Lichtquelle mit einer Abbildungsoptik sowie eine Streuscheibe und einen hinter der Probe auf einer durch Lichtquelle, Abbildungsoptiken und Probe bestimmten Achse angeordneten zweiten Lichtempfänger mit einer Auswerteelektronik aufweist.

Durch die genannten Weiterbildungen kann in einfacher und bequemer Weise die sogenannte Poisson-Zahl, die das Verhältnis von Längsdehnung und Querkontraktion angibt, bestimmt werden.

Durch das erfindungsgemäße Verfahren können Messungen mit höchster Genauigkeit und insbesondere Auflösungen einer gemittelten Breitenänderung unter 1 μm durchgeführt werden. Aufgrund der Einfachheit des Verfahrens kann dieses auch in der industriellen Werkstoffprüfung eingesetzt werden, wo die bisherigen aufwendigen, mechanischen Verfahren nicht eingesetzt wurden, da sie aufgrund ihres Aufwandes, der Erforderlichkeit der Genauigkeit des Arbeitens sowie des Zeitaufwandes nur in Wissenschaft und Forschung eingesetzt werden konnten, nicht aber zur regelmäßigen Überwachung der Herstellung von Werkstoffen etc. Weiterhin ist bei dem erfindungsgemäßen berührungslosen Verfahren keine nachteilige Rückwirkung der Meßanordnung auf die Probe gegeben.

Das erfindungsgemäße Verfahren gestattet eine problemlose Meßwertverarbeitung, mittels Operationsstärkern, da die Photoempfängeranordnung bereits eine dem Meßwert proportionale Gleichspannung liefert. Darüber hinaus kann das erfindungsgemäße Verfahren auch in einfacher Weise dazu eingesetzt werden, die gemessene Querkontraktion zum Steuern der Zugspannung in einem System, gegebenenfalls im Sinne eines Regelkreises, direkt einzusetzen.

Ein weiterer Vorteil der Erfindung liegt darin, daß Messungen mit hohen Dehnungsgeschwindigkeiten bis zu Schnellreißversuchen durchgeführt werden können, womit das Kontraktionsverhalten von Werkstoffen im Bereich der Grenzbeanspruchungen bei großen Zugspannungsänderungen mit hoher Genauigkeit gemessen werden kann. Darüber hinaus kann durch das erfindungsgemäße Verfahren das rein elastische Verhalten, d.h. die reine elastische Querkontraktion, mit hoher Genauigkeit bestimmt werden, ohne daß hierzu Extrapolationen der geschwindigkeitsabhängigen Querkontraktionszahl, die bei niedrigen Dehnungsgeschwindigkeiten neben dem Anteil des elastischen Verhaltens auch einen des plastischen Verhaltens enthält, notwendig sind.

Bevorzugte Ausgestaltungen des erfindungsgemäßen Verfahrens sehen vor, daß der zweite Lichtstrahl aus diffusem, homogenem Licht besteht, und daß der zweite Lichtstrahl aus einem breiteren Lichtstrahl ausgeblendet wird. Die Breite des auftreffenden Lichtstrahls in Richtung der Erstreckung der Probe wird dabei so gewählt, daß die Rauhigkeiten im Randbereich der Probe ausgemittelt werden. Es kann vorgesehen sein, daß die Abbildungsoptik zumindest eine den Lichtstrahl der Lichtquelle in einen Parallelstrahl abbildende Linse aufweist. Die Ausblendung eines geeigneten schmalen Lichtstrahls erfolgt dadurch, daß die Abbildungsoptik einen zwischen Probe und Lichtquelle angeordneten, sich quer zur Längserstreckung der Probe erstreckenden Spalt aufweist. Zur Untersuchung des Zugverhaltens, beispielsweise einer Rohrprobe oder dgl., können auch gleichzeitig mehrere Messungen aus verschiedenen Richtungen durchgeführt werden.

Durch das erfindungsgemäße optische Verfahren sowie die optische Anordnung wird darüber hinaus ein einfaches, schnelles und genaues Messen der Längsdehnung, insbesondere auch in Teilbereichen — und damit der Verteilung der Dehnung über die Länge der Probe — möglich, wobei äußere Einflüsse, wie Erschütterungen etc., nahezu keinen Einfluß ausüben. Durch das erfindungsgemäße Verfahren können Messungen mit höchster Genauigkeit und großen Auflösungen durchgeführt werden, wobei die Genauigkeit der Messung der Raster von der Abtastgeschwindigkeit des Strahls, von der Güte des detektierten Signals (Signal-Rausch-Verhältnis) und von der elektronischen Verarbeitungsgeschwindigkeit abhängt. Die Abtastfrequenz kann insbesondere bei der Verwendung von akusto-optischen Deflektoren in einem Bereich von mehreren hundert Kilohertz gebracht werden. Das vom Empfänger empfangene und elektronisch zu bearbeitende Signal ist eine Funktion der Frequenz des durch auf die Probe aufgebrachten Längsrasters intensitätsmodulierten, reflektierten und von dem Lichtempfänger empfangenen Lichts. Hierin, nämlich daß die Meßinformation als Frequenz aufgrund der Rasterung vorliegt, ist ein wesentlicher Vorteil zu sehen, da die Information so unabhängig von einer bestimmten Darstellung vorliegt und in beliebiger geeigneter Weise weiterverarbeitet werden kann. Die Verarbeitung des empfangenen Signals kann insbesondere im Multicounting-Verfahren erfolgen. Grundsätzlich sind aber auch Frequenz-Spannungsumwandlungen oder die Verarbeitung mittels preiswerter PLL-Kreise möglich, wobei die zeitaufgelöste Frequenzdetektion, die der ortsaufgelösten Dehnung entspricht, durch Hochmischen einer Frequenz mit einer Mittenfrequenz wesentlich verbessert werden kann. Wenn das empfangene Signal zur Regelung der Zuggeschwindigkeit eingesetzt wird, kann hiermit die Dehnungsgeschwindigkeit in einem interessierenden Bereich gesteuert werden. Durch das erfindungsgemäße Verfahren kann insbesondere auch bei schnellen Reißversuchen mit Zuggeschwindigkeiten in der Größenordnung von mehreren Metern pro Sekunde gemessen werden, wie es bisher nicht möglich war. Bei Spiegel-Reflexion an der Probe ist die Länge, über die die Dehnung gemessen werden kann, durch die Abmessungen der Optik, insbesondere den radialen Durchmesser der im reflektierten Strahl angeordneten Sammellinse, begrenzt. Sollen größere Dehnungslängen überstrichen werden, kann vorzugsweise auch diffus reflektiertes Licht genutzt werden.

Die Meßergebnisse werden insbesondere erfindungsgemäß in geeigneter Weise verglichen, wobei gegebenenfalls zunächst vorgesehen sein kann, daß die durch die Dehnung bedingte Frequenzänderung des derart intensitätsmodulierten Lichts in eine entsprechende zweite Spannng umgewandelt wird, die mit der durch den hinter der Probe auf den Detektor fallenden Lichtanteil erzeugten Spannung, gegebenenfalls nach Eichung, verglichen wird. Hierzu ist eine gemeinsame Auswerteeinheit vorgesehen. Weiterhin sind mit Vorteil Anzeigeeinrichtungen vorgesehen, so daß die beiden Spannungen, gegebenenfalls nach elektronischer Verarbeitung auf die X- und Y-Eingänge eines Anzeigegeräts gegeben werden. Ergebnisse können auch gespeichert werden.

Weitere Vorteile und Merkmale der Erfindung ergeben sich aus den Ansprüchen und aus der nachfolgenden Beschreibung, in der ein Ausführungsbeispiel unter Bezugnahme auf die Zeichnung im einzelnen erläutert ist. Dabei zeigt:

Fig. 1 eine schematische Darstellung der Meßanordnung in Draufsicht;

Fig. 2 die prinzipielle Anordnung des Teils zur Messung der Querkontraktion;

Fig. 3 die Beleuchtung der Zugprobe mit Lichtbändern;

Fig. 4 eine schematische Prinzipdarstellung des Anordnungsteils zum Messen der Längsdehnung;

Fig. 5 eine Darstellung der Verschiebung der Meßrasterung auf der Probe unter Zug; und

Fig. 6 die Darstellung der Intensität des reflektierten Lichts a) ohne Dehnung, b) bei einer Dehnung von ca. 10%, c) das Signal von b nach weiterer Umformung.

Die wesentlichen Elemente der erfindungsgemäßen Anordnung sind in einem Gehäuse 1 untergebracht. Zunächst ist in dem Gehäuse eine Beleuchtungseinrichtung 2 angeordnet, die beispielsweise eine Ellipsoid-Lampe 3, eine Blende 4, vorzugsweise mit einer Volumenstreuscheibe, einer Linse 6 und einer Austrittsblende 7 aufweist. Nicht im Gehäuse 1, sondern mit Abstand zu diesem auf der durch die vorstehend beschriebene Beleuchtungseinheit bestimmten optischen Achse ist eine Empfangseinheit 11 mit einer Abschattungsblende, einer Fokussierlinse 12 und einer auf einem Halter befestigten Fotodiode 13 angeordnet. Die Zugprobe 21 wird zwischen der Beleuchtungseinheit 2 und der Empfangseinheit 11 angebracht.

Das Gehäuse 1 weist weiterhin eine zweite Beleuchtungsanordnung mit einer weiteren Lichtquelle in Form eines Lasers 31 auf, der durch ein Hochspannungsnetzgerät 32 gespeist wird. Der Laser ist vorzugsweise ein Helium-Neon-Laser mit einer Leistung von etwa 0,5 mW; sein Strahl hat einen Durchmesser von 0,8 mm. Wesentlich ist, daß der Strahldurchmesser die Breite des auf der Zugprobe 21 angebrachten Rasters nicht überschreitet.

Im Weg des Lichtstrahls 33 des Lasers 31 befindet sich ein Deflektor 34 in Form eines Drehspiegels, der von einem Motor 36 angetrieben wird. Der Drehspiegel weist als Grundkörper einen Mehrkant, wie eine Präzisions-Glas-Küvette auf, deren Seiten verspiegelt sind. Die Küvette ist auf einem Träger aufgesetzt und beispielsweise mit diesem verklebt. Der Träger wird durch die Welle des Motors 36 gehalten. Im dargestellten Ausführungsbeispiel ist der Motor ein Synchronmotor, der mit der Netzspannung an 50 Hz/220 V betrieben werden kann, so daß ohne großen Aufwand für Regelung etc. eine hinreichend konstante Drehzahl erreichbar ist. Der Motor wird mit einer Drehzahl von 500 Umdrehungen pro Minute betrieben, was bei vier Spiegelflächen damit 2000 Abtastungen pro Minute ergibt. Hiermit sind normale Zugversuche durchführbar. Statt dessen kann in bevorzugter Weise auch ein drehzahlgeregelter Gleichstrommotor verwendet werden, der bei unterschiedlichen Rastern, d.h. unterschiedlichen Dehnungsbereichen, den wesentlichen Vorteil hat, daß die für die Signalverarbeitung optimierte Frequenz als Funktion von Rasterabstand und Motordrehzahl eingestellt werden kann. Bei Schnellzugverfahren kann die Abtastfrequenz durch Erhöhung der Drehzahl und/oder der verspiegelten Flächen des Drehspiegels weiter erhöht werden. Weiterhin können insbesondere auch bei Schnellreißversuchen andere Arten von Deflektoren, beispielsweise piezo-elektrische oder dgl. eingesetzt werden, mit denen sehr hohe Ablenkungsfrequenzen erreichbar sind.

Hinter dem Deflektor 34 ist im Gehäuse 1 derart eine Zylinderlinse 37 angeordnet, daß einerseits der Drehspiegel sich in ihrem einen Brennpunkt befindet und andererseits vorzugsweise der Ort der Probe 21 im weiteren Brennpunkt ist, so daß der annähernd parallele Laserstrahl auf die Probenoberfläche fokussiert wird.

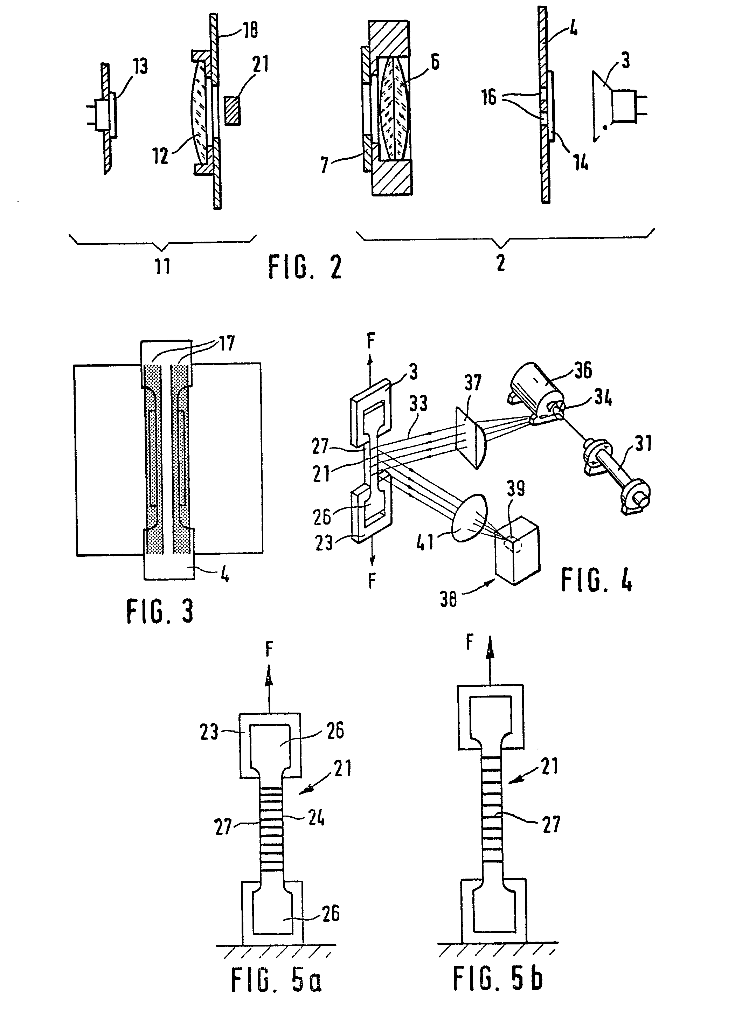

Bei der gegebenen Anordnung bewirkt die Zylinderlinse darüber hinaus, daß der Lichtstrahl bei der durch den Drehspiegel bedingten Abtastung sozusagen zu sich parallel über die Zugprobe unter auf ihr aufgebrachte Raster geführt wird. Der Laserstrahl 33 wird von der Zugprobe reflektiert. Dementsprechend ist im Gehäuse eine weitere Empfangsanordnung 38 vorgesehen, die neben einer Fotodiode 39 unter anderem eine Linse 41 aufweist. Die von den beiden Fotodioden 13, 39 gefangenen Signale werden einer elektronischen Schaltung 51 zugeführt und dort in einer weiter unten zu erläuternden Weise verarbeitet. Das Licht der Lampe 3 wird mittels einer Volumenstreuscheibe 14 derart diffus gestreut, daß die Intensität des die Probe 21 beleuchtenden Lichts weitgehend homogen ist, also jeder Punkt der Probe in Längs- und Querrichtung mit im wesentlichen der gleichen Beleuchtungsstärke beleuchtet wird, um ein möglichst lineares Signal zu erhalten. Der Streuscheibe 14 ist unmittelbar die Doppelblende 4 zugeordnet, die zwei Blendenschlitze 16 aufweist, durch welche das Licht der Lampe 3 in zwei Teilbänder zerlegt wird, die durch die Linse 6 parallelisiert werden, wobei durch die weitere Blende 7 die Ränder der Lichtstrahlen ausgeblendes werden. Es fallen demgemäß zwei Lichtbänder 17 (Fig. 3) auf die Probe 21 und die hinter dieser angeordnete Abschattungsblende 18, die unmittelbar hinter der Probe 21 angeordnet ist. Wie insbesondere der Fig. 3 entnehmbar ist, hängt der zwischen Probe 21 und Abschattungsblende 18 hindurchfallende Lichtanteil der beiden Lichtbänder 17 linear von der Breite der Probe ab, die sich bei Ausübung von Zug auf die Probe in Querrichtung zusammenzieht. Es kann eine Kalibrierung erfolgen, wenn die Abschattungsblende 18 einstellbar ist und im entspannten Zustand der Probe 21 derart eingestellt wird, daß gerade kein Licht zwischen ihr und der Probe 21 hindurchfällt. Die zwischen Probe 21 und Abschattungsblende 18 bei Zug hindurchfallende Lichtmenge wird über eine Fokussierlinse 12 auf die Fotodiode 13 fokussiert und zunächst in einen der Beleuchtungsstärke proportionalen Strom umgewandelt. Die Fotodiode wird in Sperrichtung vorgespannt, wobei die Sperrschichtkapazität gleichzeitig verringert und ein schnelleres Ansprechen ermöglicht wird. Durch Reihenschaltung eines Widerstandes mit der Fotodiode wird der Fotostrom in eine über den Widerstand abzunehmende proportionale Spannung umgesetzt, wobei der Wert des Widerstandes die Empfindlichkeit der Anordnung bestimmt. Die weitere elektronische Schaltung besteht zunächst im wesentlichen aus einem Verstärker und einem Elektrometersubtrahierer zum Nullabgleich zur Ausschaltung von Umgebungslicht.

Die nicht weiter dargestellte Zugeinrichtung weist Klemmeinrichtungen 23 zum Festklemmen der Schulterprobe 21 auf. Die Schulterprobe 21 selbst (Fig. 5a) weist ein Mittelteil 24 und an beiden Enden desselben verbreiterte Angriffsteile 26 (Schultern) auf, an denen die Klemmeinrichtungen 23 angreifen. Weiterhin ist zumindest auf einer Seite der Schulterprobe 21 im Mittelteil 24 ein Querraster 27 unterschiedlichen Absorptions- und damit Reflektionsoder Steuervermögens, ähnlich einem Strichcode aufgebracht. Das Querraster 27 kann dabei beispielsweise im Siebdruck aufgedruckt sein. Die Probe selbst besteht aus einem beliebigen Material, das auf seine Längsdehnung im Zugversuch, insbesondere im Schnellreißversuch untersucht werden soll. Die Schulterprobe 21 wird bei einem solchen Versuch durch eine Zugeinrichtung, die mit den Klemmeinrichtungen 23 verbunden ist, in Richtung des Pfeils F auseinandergezogen. Aus der Fig. 5 ist ersichtlich, daß die Rasterstücke beim Ziehen der Probe (Fig. 5b) ihren Abstand vergrößern, wodurch die Frequenz der durch das Raster 27 modulierten Intensität des reflektierten Lichts eines die Probe gleichmäßig, d.h. mit unveränderter Abtastfrequenz überstreichenden Strahls verändert wird.

Letzteres geschieht durch den Deflektor 34, der den Lichtstrahl in Längsrichtung der Probe 21 über diese bewegt, ihn also über die Probe «scannt», so daß mittels des Lichtstrahls die Probe 21 und deren Querrasterung 27 abgetastet wird. Der Lichtempfänger 39 kann ein geeigneter Fotodetektor wie eine Fotodiode oder ein Foto-FET sein, der in der oben beschriebenen Weise geschaltet ist. Die Verarbeitungselektronik 51 kann frequenzselektive Mittel, Verstärkereinheiten und insbesondere einen Speicher zum Speichern des vom Fotoempfänger 13 aufgenommenen Abtasterergebnisses der Abtastung der Querrasterung 27 enthalten. Sie kann weiterhin eine Einrichtung zur Regelung der Zugeinrichtung und damit zur Durchführung eines geregelten Zugversuchs aufweisen.

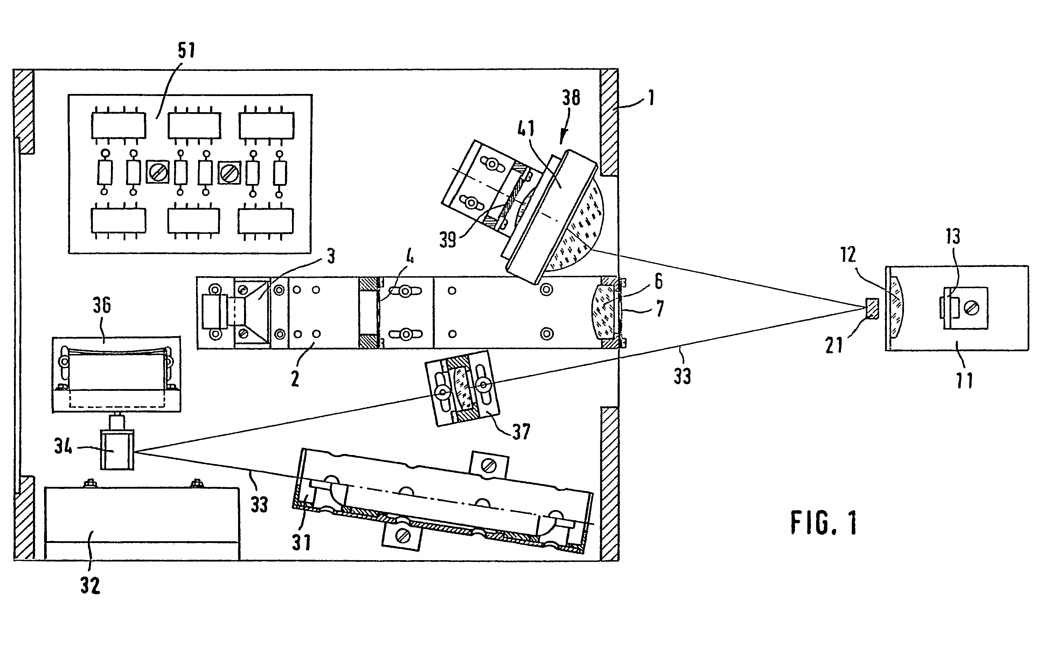

Der Versuch wird nun derart durchgeführt, daß, wie schon erwähnt, die Zugeinrichtung die Probe 21 über die Klemmeinrichtungen 23 in Längsrichtung der Probe 21 auseinanderzieht und damit dehnt. Die relative Dehnung $\triangle$d (Fig. 1b) ist dabei im Mittelbereich der Probe größer als im Randbereich der Probe 21 nahe den Schulterstücken 26. Insbesondere kann bei bestimmten Werkstoffen bei einem Schnellreißversuch an der Probe 21 lokal ein Spannungsabfall also ein Abfall der Festigkeit der Probe in diesem Bereich und eine hierdurch bedingte labile Weiterdehnung in diesem Bereich auftreten, woraufhin die Dehnung dann auf diesen Bereich beschränkt bleiben, bis schließlich der Bruch eintritt.

Während des Dehnens der Probe 21 mittels der Zugeinrichtung wird die Probe und genauer ihr Querraster 27 in Längsrichtung mittels des Deflektors 34 vom Strahl 33 wiederholt abgetastet. Die Abtastgeschwindigkeit des abgelenkten Strahls 33 ist wesentlich größer als die Zuggeschwindigkeit.

Während die Zuggeschwindigkeit beispielsweise bei einem geregelten Schnellreißversuch in der Größenordnung von 10 bis 15 m/s (und bei einem normalen Dehnversuch in der Größenordnung von cm/s oder pro Minute) liegt, wird die Probe in Längsrichtung mit einer relativ hohen Frequenz von 50 bis 100 Hz bei einem Drehspiegel bis zu zwischen 100 KHz und dem Megahertzbereich im Falle eines akusto-optischen Deflektors abgetastet.

Von dem Lichtempfänger 14 wird dann aufgrund des Rasters 27, welcher das Licht abwechselnd weitgehend absorbiert und diffus reflektiert usw. ein mit hoher Frequenz intensitätsmoduliertes Licht empfangen, wobei die Frequenz der Intensitätsmodulation durch die Abtastfrequenz und den Abstand der Striche 28 des Querrasters 27 bestimmt ist. Wenn nun die Probe beim Zugversuch auseinandergezogen wird, ändert sich der Abstand der Striche 28 des Querrasters 27 und damit die von dem Fotoempfänger 39 empfangene Frequenz der Intensitätsmodulation, so daß diese Frequenzänderung die Information über das Längsdehnungsverhalten der Probe 21 beim Zugversuch enthält.

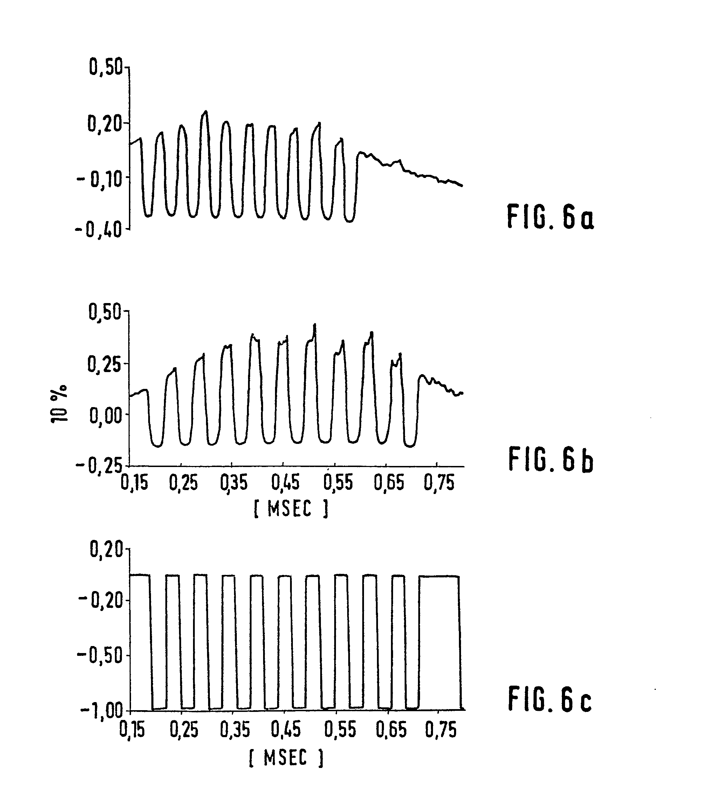

Das Signal der Fotodiode 39 kann einen Störanteil durch Umgebungslicht, wie Tageslicht oder Kunstlicht aufweisen, der durch einen optischen Filter vor dem Fotoempfänger oder ein elektrisches Filter nach dem Empfänger ausgefiltert wird, so daß nur das Signal der Zugprobe durchgelassen wird. Dieses ist für eine Probe ohne Zug in der Fig. 6a und für die gleiche Probe unter Zug in der Fig. 6b dargestellt. Soweit die relative Dehnungsänderung $\triangle$d nicht über die gesamte Länge der Probe gleich ist, ist auch durch das erfindungsgemäße Vorgehen dieses über die Länge hin unterschiedliche Dehnungsverhalten durch unterschiedliche Frequenz der Intensitätsmodulation festzustellen. Das vom Empfänger empfangene und von der Elektronik weiterzuverarbeitende Signal ist bei der Längsdehnungsmessung die Frequenz des intensitätsmodulierten Lichts, die direkt proportional zum Abstand der Striche des Rasters ist. Das Signal wird zu einem Rechteckkurvenzug mittels beispielsweise eines Schmitt-Triggers umgeformt (Fig. 6c). Die Weiterverarbeitung kann neben einer Fourier-Transformation des Frequenzsignals mittels eines Rechners eine Frequenz-Spannungsumwandlung oder aber eine digitale Zählung im Multi-Counting-Verfahren beinhalten, wobei das zweitgenannte Verfahren im Prinzip einfacher ist und die digitale Umwandlung insbesondere bei hohen Geschwindigkeiten eingesetzt wird. Beim Multi-Counting-Verfahren werden Zähler, die mit einem hochfrequenten Oszillator verbunden sind, gemeinsam durch die Führungsflanke einer ersten Welle gestartet und nacheinander durch die Flanken nachfolgender Wellen oder Impulse gestoppt. Die Zählerinformationen können direkt im Speicher eines Rechners abgelegt und anschließend weiterverarbeitet werden. Eine einfache und preiswerte Frequenzspannungsdemodulation kann auch mit einer PLL-Schaltung erfolgen. Hierbei wird die Phasenlage des Meßsignals mit der eines spannungsgesteuerten Referenzoszillators (VCO) verglichen und aus der Phasendifferenz über eine geeignete Regelschaltung der VCO nachgezogen. Die Steuerspannung des VCO ist im Fangbereich des PLL proportional zur Frequenz des Signals.

Eine weitere Verarbeitungsmöglichkeit beinhaltet einen Monoflop mit nachgeschaltetem Integrator. Durch eine Halteschaltung, beispielsweise in Form mit einem Scheitelwertmesser wird der gemessene Spannungsmeßwert gehalten.

Als weitere Elemente können Analogsubtrahierer u.a. zum Nullabgleich vorgesehen sein. Die Spannungswerte von Längsdehnungs- und Querkontraktionsmessung können zur Auswertung direkt auf x- und y-Eingänge eines Oszillographen oder eines Schreibers gegeben werden. Nach Division durch einen die absolute Länge bzw. Breite repräsentierenden Wert kann zur Bestimmung der Querkontraktionszahl auch sogleich das Verhältnis der relativen Querkontraktion und Längsdehnung sei es elektronisch, sei es über einen Oszillograph oder Schreiber aufgrund der dann gegebenen Steigung bestimmt werden.

Soweit vorstehend von Licht gesprochen wird, so handelt es sich vorzugsweise um sichtbares Licht, es kann sich aber auch um nicht sichtbares Licht handeln. Durch das erfindungsgemäße Verfahren und die erfindungsgemäße Vorrichtung wird eine einfache und bequeme Möglichkeit geschaffen, die Längsdehnung einer Probe zu bestimmen, insbesondere bei Schnellreißversuchen, bei denen die herkömmlichen vor allem mechanische Abtaster zu träge sind. Dabei kann auch ein geregelter Zugversuch durchgeführt werden, wobei nicht die Einstellung der Geschwindigkeit an der Zugmaschine selbst, sondern die Regelung der Dehnungsgeschwindigkeit der Probe selbst in einem charakteristischen Bereich, gemeint ist. Das erfindungsgemäße Verfahren und die Vorrichtung können mit Vorteil bei der regelmäßigen Werkstoffprüfung in Industrielabors eingesetzt werden. Durch das erfindungsgemäße Verfahren lassen sich Reißversuche in einfacher Weise mit hoher Genauigkeit der Beobachtung der relevanten Werte über den gesamten Reißvorgang durchführen. Weiterhin läßt sich ebenfalls in einfacher und bequemer Weise die Querkontraktionszahl von unterschiedlichen Materialien ohne großen Aufwand serienmäßg feststellen.

Die in der vorstehenden Beschreibung, in der Zeichnung sowie in den Ansprüchen offenbarten Merkmale der Erfindung können sowohl einzeln als auch in geeigneten Kombinationen für die Verwirklichung der Erfindung in ihren verschiedenen Ausführungsformen wesentlich sein.

**Patentansprüche**

1. Verfahren zur Untersuchung von Materialien unter Zug, wobei eine Probe (21) an ihren Enden (26) eingespannt, eine Zugspannung ausgeübt und die Probe (21) damit gedehnt wird sowie ein auf die Probe (21) gerichteter und von dieser reflektierter Strahl (33) in einem Fotoempfänger (38) aufgenommen und elektronisch verarbeitet wird, dadurch gekennzeichnet, daß die mit einem Querraster (27) unterschiedlichen Reflexions- bzw. Absorptionsvermögen versehene Probe (21) von dem Lichtstrahl in Längsrichtung überstrichen wird, so daß die Modulationsfrequenz des reflektierten intensitätsmodulierten Lichts (33) durch die Dehnung verändert wird.

2. Verfahren nach Anspruch 1, dadurch gekennzeichnet, daß ein zweiter Lichtstrahl endlicher Breite, dessen Ausdehnung die Breite der Probe (21) in ungedehntem Zustand nicht unterschreitet, auf die Probe (21) gerichtet und das hinter der Probe (21) auf einen Detektor (11) fallende Licht in eine Spannung umgewandelt und diese Spannung gemessen wird.

3. Verfahren nach Anspruch 2, dadurch gekennzeichnet, daß die durch die Dehnung bedingte Änderung der Modulationsfrequenz des derart intensitätsmodulierten Lichts (33) in eine entsprechende zweite Spannung umgewandelt wird, die mit der, durch den hinter der Probe auf den Detektor (11) fallenden Lichtanteil erzeugten Spannung, gegebenenfalls nach Eichung, verglichen wird.

4. Verfahren nach einem der Ansprüche 2 oder 3, dadurch gekennzeichnet, daß der zweite Lichtstrahl aus diffusem, homogenem Licht besteht.

5. Verfahren nach Anspruch 2 oder 3, dadurch gekennzeichnet, daß der zweite Lichtstrahl aus einem breiteren Lichtstrahl ausgeblendet wird.

6. Verfahren nach Anspruch 2 oder 3, dadurch gekennzeichnet, daß der zweite Lichtstrahl durch zwei Lichtbänder (17) ausgebildet wird.

7. Verfahren nach einem der Ansprüche 1 bis 6, dadurch gekennzeichnet, daß zur Durchführung eines geregelten Zugversuchs die Zugspannung in Abhängigkeit von den gemessenen Spannungen geregelt wird.

8. Verfahren nach Anspruch 3, dadurch gekennzeichnet, daß die beiden Spannungen in Relation zu absolute Längen- und Breitenwerten der Probe (21) in ungedehntem Zustand repräsentierenden Spannungen gesetzt und dann miteinander verglichen werden.

9. Verfahren nach Anspruch 8, dadurch gekennzeichnet, daß der sich ergebende Meßwert, gegebenenfalls nach Mittelwertbindung angezeigt wird.

10. Verfahren nach Anspruch 3, dadurch gekennzeichnet, daß die beiden Spannungen, gegebenenfalls nach elektronischer Verarbeitung auf die X- und Y-Eingänge eines Anzeigegeräts gegeben werden.

11. Anordnung zur Untersuchung von Materialien unter Zug, mit einer Zugeinrichtung und einer Meßeinrichtung, wobei vor einer Probe (21) eine Lichtquelle (31) sowie mindestens ein Lichtempfänger (38) angeordnet sind und zwischen Lichtquelle (31) und Probe (21) eine Deflektionseinrichtung (34) vorgesehen ist, dadurch gekennzeichnet, daß auf der Probe ein Querraster (7) unterschiedlichen Reflexions- bzw. Absorptionsvermögen aufgebracht ist und der Deflektionseinrichtung (34) eine Linse (37) zur Parallelisierung der von der Deflektionseinrichtung (34) wiederholt abgelenkten, die Probe überstreichenden Lichtstrahlen nachgeordnet ist und daß dem Lichtempfänger eine elektronische Auswerteeinheit (51) zur Auswertung der in der Modulationsfrequenz des durch die Probe (21) reflektierten Lichts (33) enthaltenen Information nachgeordnet ist.

12. Anordnung nach Anspruch 11, dadurch gekennzeichnet, daß weiter eine Einrichtung zur Messung der Breitenänderung der Probe (21) vorgesehen ist, die eine vor der Probe angeordnete Lichtquelle (4) mit einer Abbildungsoptik (6, 7) sowie eine Streuscheibe und einen hinter der Probe auf einer durch Lichtquelle (4) Abbildungsoptiken (6, 7) und Probe (21) bestimmten Achse (9) angeordneten zweiten Lichtempfänger mit einer Auswerteelektronik aufweist.

13. Anordnung nach den Ansprüchen 11 und 12, dadurch gekennzeichnet, daß den beiden Lichtempfängern (11, 38) eine gemeinsame Auswerteeinheit (51) zugeordnet ist.

14. Anordnung nach einem der Ansprüche 11 bis 13, dadurch gekennzeichnet, daß die Deflektionseinrichtung (34) einen akusto-optischen Deflektor aufweist.

15. Anordnung nach einem der Ansprüche 11 bis 13, dadurch gekennzeichnet, daß die Deflektionseinrichtung (34) einen Drehspiegel, Kippspiegel oder Drehprismen aufweist.

16. Anordnung nach Anspruch 12 oder 13, dadurch gekennzeichnet, daß vor dem zweiten Lichtempfänger (38) eine Filteranordnung vorgesehen ist.

17. Anordnung nach einem der Ansprüche 11 bis 13, dadurch gekennzeichnet, daß die elektronische Auswerteeinrichtung (51) mit einer Zugeinrichtung zur Regelung des Ziehens der Probe (21) verbunden ist.

18. Anordnung nach Anspruch 13, dadurch gekennzeichnet, daß die Auswerteeinrichtung (51) Schaltungselemente zur Bestimmung der Relativwerte gemessener Meßgrößen in bezug auf Ausgabeabmessungen der Probe (21) repräsentiert durch Referenzwerte aufweist.

19. Anordnung nach Anspruch 13, dadurch gekennzeichnet, daß ein Dividierer zur Division der Meßwerte des ersten und zweiten Lichtempfängers (11, 38) sowie eine Anzeige zur Anzeige des sich ergebenden Werts vorgesehen ist.

**Claims**

1. Method for the examination of materials under stress, in which a sample (21) is fixed by its ends (26), a tensile stress is exerted and the sample (21) consequently stretched, as well as a beam (33) directed onto the sample (21) and reflected by the latter is received in a photocell (38) and electronically processed, characterized in that the sample (21) provided with a transversal raster (27) having differing reflection or absorption capacity is swept over by the light beam in the longitudinal direction, so that the modulation frequency of the reflected intensity-modulated light (33) is modified by the stretching.

2. Method according to claim 1, characterized in that a second light beam of finite width, whose extension does not drop below the width of the sample (21) in the unstretched state is directed onto the sample (21) and the light striking a detector (11) behind the sample (21) is converted into a voltage, which is measured.

3. Method according to claim 2, characterized in that the change to the modulation frequency of the thus intensity-modulated light (33) caused by the stretching is converted into a corresponding second voltage, which is compared with the voltage produced by the light fraction striking the detector (11) behind the sample, optionally following calibration.

4. Method according to one of the claims 2 or 3, characterized in that the second light beam comprises diffuse, homogeneous light.

5. Method according to claims 2 or 3, characterized in that the second light beam is blocked off from a wider light beam.

6. Method according to claims 2 or 3, characterized in that the second light beam is formed by two optical patterns (17).

7. Method according to one of the claims 1 to 6, characterized in that the tensile stress is regulated as a function of the measured voltages for carrying out a regulated tension test.

8. Method according to claim 3, characterized in that the two voltages are related to voltages representing absolute length and width values of the sample (21) in the unstretched state and are then compared with one another.

9. Method according to claim 8, characterized in that the resulting measured value is indicated or displayed, optionally after averaging.

10. Method according to claim 3, characterized in that the two voltages, optionally following electronic processing, are supplied to the X and Y-inputs of an indicator.

11. Apparatus for examining materials under stress, with a stressing device and a measuring device, in which upstream of a sample (21) are arranged a light source (31) and at least one light receiver (38) and between the light source (31) and sample (21) is provided a deflection mechanism (34), characterized in that the sample is provided with a transversal raster (7) of different reflection or absorption capacity and behind the deflection mechanism (34) is arranged a lens (37) for rendering parallel the light beams repeatedly deflected by the deflection mechanism (34) and sweeping over the sample and that downstream of the light receiver is provided an electronic evaluation unit (51) for evaluating the information contained in the modulation frequency of the light (33) reflected by sample (21).

12. Apparatus according to claim 11, characterized in that a device is provided for measuring the width change of the sample (21), which has a light source (4) arranged upstream of the sample and having an imaging optics (6, 7), as well as a diffusion screen and a second light detector with an evaluation electronic arranged behind the sample on an axis (9) defined by the light source (4), imaging optics (6, 7) and sample (21).

13. Apparatus according to claims 11 and 12, characterized in that a common evaluation unit (51) is associated with the two light detectors (11, 38).

14. Apparatus according to one of the claims 11 to 13, characterized in that the deflection mechanism (34) has an acousto-optical deflector.

15. Apparatus according to one of the claims 11 to 13, characterized in that the deflection mechanism (34) has a rotating mirror, tilting mirror or rotary prisms.

16. Apparatus according to claims 12 or 13, characterized in that a filter means is provided upstream of the second light detector (38).

17. Apparatus according to one of the claims 11 to 13, characterized in that the electronic evaluation means (51) is connected to a stesssing device for regulating the stressing of sample (21).

18. Apparatus according to claim 13, characterized in that the evaluation means (51) has switching elements for determining the relative values of measured quantities relative to output dimensions of the sample (21) represented by reference values.

19. Apparatus according to claim 13, characterized in that a divider is provided for dividing the measured values of the first and second light detectors (11, 38), as well as an indicator for indicating the resulting value.

**Revendications**

1. Procédé pour l'examen de matériaux sous tension, une éprouvette (21) étant fixée par ses extrémités (26) et soumise à un effort de traction provoquant ainsi un allongement de l'éprouvette (21), et un faisceau (33) dirigé vers l'éprouvette (21) et réfléchi par celle-ci étant reçu par un photodétecteur (38) et traité électroniquement, caractérisé en ce que l'éprouvette (21) munie d'une trame transversale (27) présentant un pouvoir de réflexion et respectivement d'absorption variable est balayée dans le sens longitudinal par le faisceau lumineux de telle façon que la fréquence de modulation de la lumière réfléchie (33) modulée en intensité est modifiée par l'allongement.

2. Procédé selon la revendication 1, caractérisé en ce qu'un second faisceau lumineux d'une largeur finie dont l'extension n'est pas inférieure à la largeur de l'éprouvette (21) à l'état non allongé est dirigé vers l'éprouvette (21) et que la lumière parvenant, derrière l'éprouvette (21), à un détecteur (11) est transformée en une tension laquelle est ensuite mesurée.

3. Procédé selon la revendication 2, caractérisé en ce que la variation de la fréquence de modulation de la lumière (33) ainsi modulée en intensité provoquée par l'allongement est transformée en une seconde tension correspondante qui est comparée, le cas échéant après étalonnage, avec la tension produite par la composante de lumière parvenant, derrière l'éprouvette, au détecteur (11).

4. Procédé selon l'une des revendications 2 ou 3, caractérisé en ce que le second faisceau lumineux est composé de lumière diffuse homogène.

5. Procédé selon l'une des revendications 2 ou 3, caractérisé en ce que le second faisceau lumineux est diaphragmé dans un faisceau lumineux plus large.

6. Procédé selon l'une des revendications 2 ou 3, caractérisé en ce que le second faisceau lumineux est constitué par deux bandes lumineuses (17).

7. Procédé selon l'une des revendications 1 à 6, caractérisé en ce que, pour la réalisation d'un essai de traction réglé, l'effort de traction est réglé en fonction des tensions mesurées.

8. Procédé selon la revendication 3, caractérisé en ce que les deux tensions sont mises en relation avec des valeurs de longueur et de largeur absolues de l'éprouvette (21) à l'état non allongé, puis comparées l'une avec l'autre.

9. Procédé selon la revendication 8, caractérisé en ce que la valeur de mesure obtenue est affichée, éventuellement après formation de la moyenne.

10. Procédé selon la revendication 3, caractérisé en ce que les deux tensions sont transmises, éventuellement après traitement électronique, aux entrées X et Y d'un appareil indicateur.

11. Dispositif pour l'examen de matériaux sous tension, avec un dispositif de traction et un dispositif de mesure, une source de lumière (31) ainsi qu'au moins un récepteur de lumière (38) étant disposés en amont d'une éprouvette (21), et un dispositif déflecteur (34) étant prévu entre la source de lumière (31) et l'éprouvette (21), caractérisé en ce que l'éprouvette est munie d'une trame transversale (7) présentant un pouvoir de réflexion et respectivement d'absorption variable et qu'en aval du dispositif déflecteur (34) est placée une lentille (37) pour la parallélisation des faisceaux lumineux déviés de manière répétitive par le dispositif déflecteur (34) et balayant l'éprouvette, et qu'une unité d'interprétation électronique (51) pour l'interprétation de l'information contenue dans la fréquence de modulation de la lumière (33) réfléchie par l'éprouvette (21) est montée en aval du récepteur de lumière.

12. Dispositif selon la revendication 11, caractérisé en ce qu'il est prévu, en outre, un dispositif pour la mesure de la variation de la largeur de l'éprouvette (21) qui comprend une source de lumière (4) placée devant l'éprouvette et équipée d'une optique de reproduction (6, 7), ainsi qu'un diffuseur et un second récepteur de lumière avec circuit électronique d'analyse installé derrière l'éprouvette, sur l'axe (9) défini par la source de lumière (4), les optiques de reproduction (6, 7) et l'éprouvette (21).

13. Dispositif selon l'une des revendications 11 ou 12, caractérisé en ce qu'aux deux récepteurs de lumière (11, 38) est associée une unité d'interprétation (51) commune.

14. Dispositif selon l'une des revendications 11 à 13, caractérisé en ce que le dispositif déflecteur (34) comprend un déflecteur acousto-optique.

15. Dispositif selon l'une des revendications 11 à 13, caractérisé en ce que le dispositif déflecteur (34) comprend un miroir tournant, un miroir basculant ou des prismes tournants.

16. Dispositif selon l'une des revendications 12 ou 13, caractérisé en ce qu'un système de filtres est prévu en amont du second récepteur de lumière (38).

17. Dispositif selon l'une des revendications 11 à 13, caractérisé en ce que l'unité d'interprétation électronique (51) est reliée à un dispositif de traction pour régler l'étirage de l'éprouvette (21).

18. Dispositif selon la revendication 13, caractérisé en ce que l'unité d'interprétation (51) comporte des éléments de circuit pour la détermination des valeurs relatives des grandeurs de mesure mesurées par rapport aux dimensions de sortie de l'éprouvette (21) représentées par des valeurs de référence.

19. Dispositif selon la revendication 13, caractérisé en ce qu'il est prévu un diviseur pour la division des valeurs mesurées des premier et second récepteurs de lumière (11, 38) ainsi qu'un indicateur pour l'affichage de la valeur obtenue.

FIG. 1

FIG. 2

FIG. 3

FIG. 4

FIG. 5a

FIG. 5b

FIG. 6 a

FIG. 6 b

[ MSEC ]

FIG. 6 c

[ MSEC ]